Europäisches Patentamt

European Patent Office

Office européen des brevets

(11) Publication number: **0 054 021**
**B1**

# EUROPEAN PATENT SPECIFICATION

(45) Date of publication of patent specification: **25.09.85**

(51) Int. Cl.⁴: **C 02 F 3/08**

(21) Application number: **80900952.5**

(22) Date of filing: **05.05.80**

(86) International application number:
**PCT/SE80/00129**

(87) International publication number:
**WO 81/02730 01.10.81 Gazette 81/23**

(54) **ROTATING BIOLOGICAL CONTACTOR.**

(43) Date of publication of application:
**23.06.82 Bulletin 82/25**

(45) Publication of the grant of the patent:
**25.09.85 Bulletin 85/39**

(84) Designated Contracting States:
**AT CH DE FR GB LI LU NL SE**

(56) References cited:
**DE-B-2 554 757**
**US-A-3 777 891**
**US-A-3 886 074**
**US-A-3 904 525**
**US-A-4 149 972**

(73) Proprietor: **NOVATEK AB**
**Box 81**
**S-162 12 Vällingby (SE)**

(72) Inventor: **HALLEN, Lars Ake**
**Kvarnbergsgatan 1**
**S-652 29 KARLSTAD (SE)**

(74) Representative: **Onn, Thorsten et al**
**AB STOCKHOLMS PATENTBYRA Box 3129**
**S-103 62 Stockholm (SE)**

# Description

The invention relates to an improvement in Rotating Biological Contactor (RBC) process and design. This RBC is a biological treatment unit of the kind that comprises several segment-like RBC material bodies, which together with a supporting structure are assembled to form an RBC rotor. Waste water to be treated flows through a tank, in which the RBC rotor is immersed. These RBC's are in general arranged so that waste water can penetrate radially and circumferentially into the rotor and consequently the flow to and from the rotor is essentially perpendicular to the axis of the rotor.

Although those known RBC's of the above kind have good performance, they are rather expensive due to their construction and they are furthermore complicated to service as the tough conditions, under which they are used, cause difficulties in dismantling. A further negative point with these RBC's is that due to their design and construction it has been impossible to use the latent developments in RBC material as these after some time are slightly compressed due to the high loads of sludge and thus would work loose in the RBC. With known RBC's tightening after some time for the above reasons is difficult.

If the RBC segments as above are not carefully and tightly fastened, initially small movement of the segments will gradually increase and finally the RBC segment material will crack or collapse.

It is the object of the invention to overcome the above difficulties and give an RBC which can always easily be assembled and disassembled, containing only easily fabricated parts.

This object is achieved with a rotating biological contactor (RBC) comprising a rotor constituted by a shaft and by filter body segments allowing radial and peripheral water flow, wherein said filter body segments are arranged peripherally about the shaft and are radially pressed inwards towards the shaft and against each other by members extending axially of the shaft over the axial dimension of the segments and the segments are essentially triangular in their cross section resulting in a saw-tooth rotor periphery, characterized in that the filter body segments do not extend fully to the shaft but leave an open space in the proximity of the centre of the rotor, resulting in improved water flow and oxygen exchange in order to avoid anaerobic conditions therein. For example levers are used together with the members in order to obtain the necessary pressure against the filter body segments. Locking as well as location of the levers can be accomplished with the aid of pins, thus avoiding problems with corrosion of screws and bolts, and simplifying readjustment of the segments, but, of course, bolts can be used also in order to secure the V-shaped members at a pressure transferring location.

In DE—A—2 554 757 an RBC is disclosed having filter body segments held against radial support struts by means of longitudinally extending L-shaped members. These segments may be essentially triangular and mounted about the shaft to give a saw-tooth peripheral form.

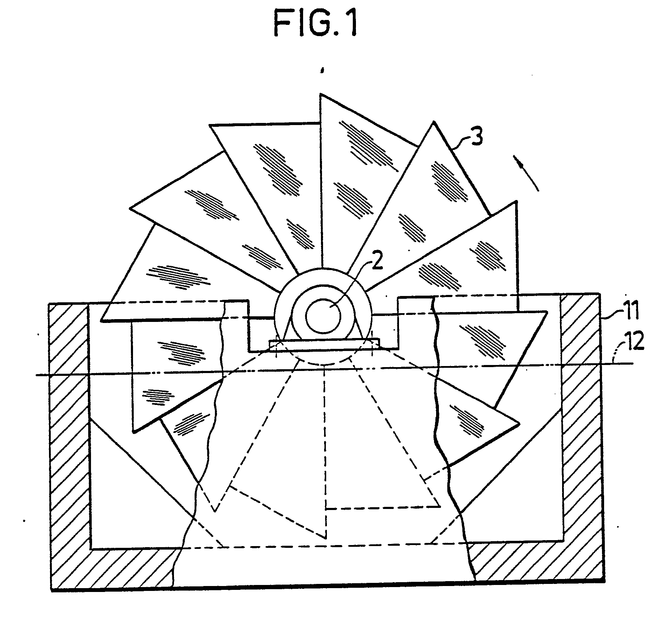

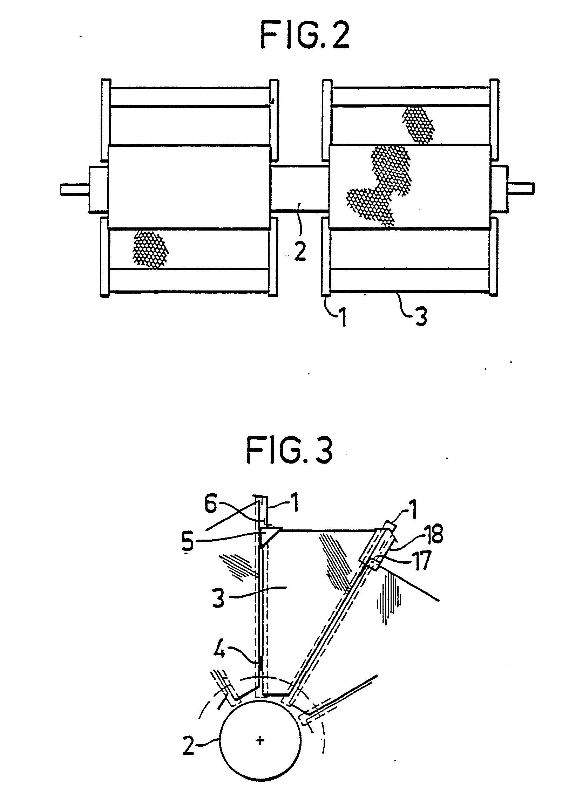

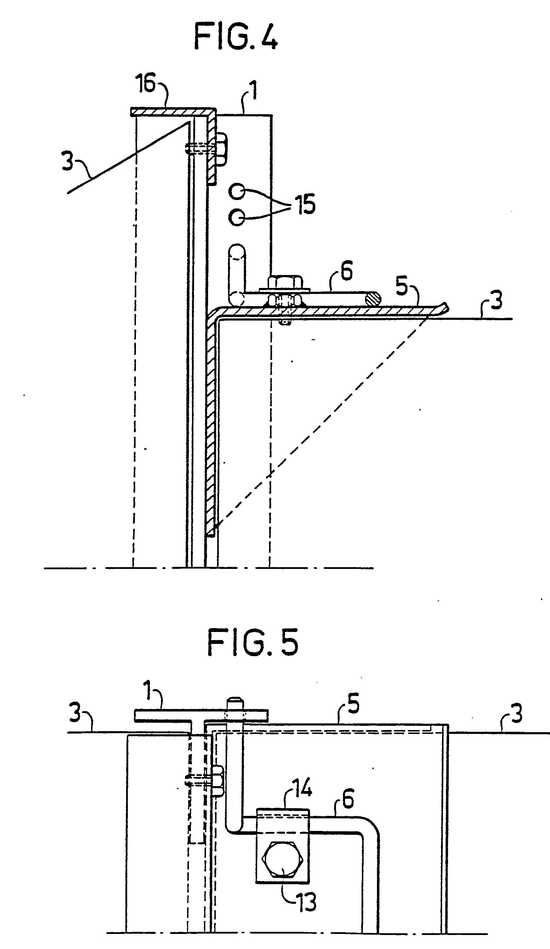

Further features and advantages with the invention are apparent from the following description of a preferred embodiment with reference to the drawings. In the drawings fig. 1 shows an RBC in accordance with the invention seen from one end or axially submerged in a tank, fig. 2 an elevated view of the RBC of fig. 1, fig. 3 examples of fastening mechanism for the segments and fig. 4 and 5, on a large scale, one fastening method.

In fig. 1 the RBC is shown submerged in a tank 11 in which the water level 12 has been indicated. The rotor is intended to rotate counter-clockwise in order to give a certain turbulence close to the bottom of the tank in order to avoid sedimentation there. A further object that is achieved is that, on rotation of the RBC, the water is propelled into the segments. This is the result of the segments having a more triangular than segmental shape. This also has advantages in connection with packing, storing and transportation of the segments prior to assembly. As can be seen from fig. 3 the segments do not extend fully to the shaft 2 of the RBC. The space between the shaft 2 and the RBC material segments 3 improves water transportation and the dislodging of sludge. It also prevents the RBC segments 3 from being subjected to cracking pressure from the shaft. Instead the segments 3 are pressed inwards against radial spokes 1 that have a "T" cross-section. In order to improve the guiding of the spokes these may further be provided with flat members for increasing the supporting surface of the spokes and, of course, the T-shaped spokes may be exchanged for flat ones provided with flat members to give the segments their angular guidance. In the above manner the RBC segments are subjected to forces in such a way that they stand well.

As has previously been indicated the RBC segments 3 are pressed inwards and in fig. 2—5 two ways of doing this are indicated. In fig. 4 the pressure radially inwards on the RBC section 3 is exerted by an elongate member 5 that has a "V"-shaped cross-section and that extends between two spokes spaced axially along the RBC. This "V"-shaped member 5 may be perforated in one way or the other in order to allow water to stream through it.

These "V"-shaped members are not themselves directly fastened on the spokes, instead a lever 6 (fig. 4 and 5) extends through a hole in the spoke 1 and after the insertion of the ends of the lever 6, which has a middle part that extends over the length of the "V"-shaped member 5, this is pressed downwards towards the "V"-shaped member thus pressing it securely against the RBC segments 3. In order to retain the lever in this biasing position a bolt 13 together with the clamping means 14 securely holds the lever against the V-shaped elongate member 5. The spokes may be provided with several holes as has been indicated at 15 in fig. 4, in order to allow for adjustment when after some time the RBC segments have become compressed.

As the RBC segments 3 are subjected to inwardly and outwardly directed gravitational forces during rotation, it is important that the pressure inwards on the "V"-shaped member is sufficient to overcome the forces radially outwards in order not to have the segments moving forth and back which will result in great wear and finally their wastage.

In order to get optimal use of the material and easy storing and cutting, the inner ends of the segments are preferably cut parallel to the outer sides. This also diminishes the risk of anaerobic conditions in the center of the RBC and also improves the abovementioned optimum material use on fabrication of the segments.

As mentioned above, one important drawback of previous existing RBC's is the tendency of settling of dislodged sludge on the bottom of the tank, resulting in anaerobic conditions and sludge flotation which, in turn, may clog the RBC material. The saw-tooth form of the segment diminishes this but it may further be improved by arranging elongate "V"-shaped members 16 between the end of the spokes, these "V"-shaped members having an edge either in or opposing the rotational direction, the direction being established by optimum turbulence conditions which may differ depending on the size of the saw-tooth. These members 16 may also be provided in order to improve the propelling of the water into the sections 3.

In fig. 3 a different alternative of fastening means is shown. The "V"-shaped members 17 are fastened at their ends in side plates 18 that are slidable radially along the spokes. The spokes and/or the sideplates 18 can be provided with elongate holes or with several holes to allow for different locking positions. Fastening may in the first case be by means of bolts and in the second by means of bolts or, in one way or the other, locked pins. At the periphery the side plates may be joined by a further member with the purpose of directing the waterflow in through the RBC segments. In order to obtain the pressure inwards on the "V"-shaped members 17 levers can, of course, be used in the same way as in fig. 4 and 5 but it is also possible only to use the levers on mounting and dismounting of the RBC segments and having the position locked by the means of pins or bolts.

The tendency towards anaerobic conditions in the center part of previously known RBC's, close to the shaft where the exchange of oxygen is most difficult is satisfactorily overcome by the arrangement according to the invention. The water is thus directed inwards to the center of the RBC and the water may then pass through the above-mentioned space between shaft and RBC segments and, in this way, the exchange of oxygen in the center part of the RBC can be greatly improved.

With the arrangement in accordance with the invention it is further possible to use the RBC materials with differing specific surface areas along the shaft and it is further easy to exchange the RBC segments and to retension segments that have worked loose. In summary, the invention results in a far more useful and economic RBC rotor than those previously used.

**Claims**

1. A rotating biological contactor (RBC) comprising a rotor constituted by a shaft (2) and by filter body segments (3) allowing radial and peripheral water flow, wherein said filter body segments are arranged peripherally about the shaft (2) and are radially pressed inwards towards the shaft (2) and against each other by members (5, 17) extending axially of the shaft (2) over the axial dimension of the segments and the segments (3) are essentially triangular in their cross section resulting in a saw-tooth rotor periphery, characterized in that the filter body segments (3) do not extend fully to the shaft (2) but leave an open space in the proximity of the centre of the rotor, resulting in improved water flow and oxygen exchange in order to avoid anaerobic conditions therein.

2. A rotating biological contactor according to claim 1, characterized in that it comprises further axial members (16, 17) at the periphery shaped to create a flow through the RBC from the periphery towards the centre.

3. A rotating biological contactor according to one of the above claims, characterized in that the members (5) that press the filter-body segments (3) inwards are pressed inwards on mounting by levers (6).

4. A rotating biological contactor according to claim 3, characterized in that the levers (6) are locked in a position pressing the members (5) against the segments (3) by means of bolts (13) and brackets (14) fastened to the members (5).

5. A rotating biological contactor according to claim 1 or 2, characterized in that the segments (3) have differing specific surface areas along the shaft.

**Patentansprüche**

1. Rotierender biologischer Kontaktgeber (RBC), der einen aus einer Welle (2) und Segmenten (3) eines Filterkörpers bestehenden Rotor umfasst, wobei die Segmente einen radialen und peripherischen Wasserfluss zulassen, um die Welle (2) peripherisch angeordnet sind, nach innen gegen die Welle (2) und gegeneinander von Mitteln (5, 17) radial gepresst werden, die sich axial zur Welle (2) über die axiale Abmessung der Segmente erstrecken, und einen wesentlich dreieckigen Querschnitt haben, was eine sägezahngeformte Rotorperipherie ergibt, dadurch gekennzeichnet, dass die Segmente (3) des Filterkörpers sich nicht vollständig bis zur Welle (2) erstrecken sondern einen freien Raum in der Nähe des Rotorzentrums lassen, was einen verbesserten Wasserfluss und Sauerstoffaustausch mitbringt, um anaerobe Verhältnisse darin zu vermeiden.

2. Rotierender biologischer Kontaktgeber nach Anspruch 1, dadurch gekennzeichnet, dass er zusätzliche Axialmittel (16, 17) an der Peripherie umfasst, die angeordnet sind, einen Fluss durch den RBC von der Peripherie gegen das Zentrum zu schaffen.

3. Rotierender biologischer Kontaktgeber nach einem der vorhergehenden Ansprüche, dadurch gekennzeichnet, dass die Mittel (5), die die Segmente des Filterkörpers (3) nach innen pressen, durch Montierung an den Hebeln (6) nach innen gepresst werden.

4. Rotierender biologischer Kontaktgeber nach Anspruch 3, dadurch gekennzeichnet, dass die Hebel (6) in einer Lage gesichert sind, worin die Mittel (5) gegen die Segmente (3) durch Bolzen (13) und an den Mitteln (5) angebrachte Stützen (14) gepresst werden.

5. Rotierender biologischer Kontaktgeber nach Anspruch 1 oder 2, dadurch gekennzeichnet, dass die Segmente (3) verschiedene spezifische Flächenbereiche längs der Welle haben.

## Revendications

1. Contacteur biologique de rotation (C.B.R.) comprenant un rotor constitué par un arbre (2) et par des segments (3) de corps filtrant permettant un écoulement d'eau radial et périphérique, lesdits segments de corps·filtrant étant disposés périphériquement autour de l'arbre (2) et étant pressés radialement vers l'intérieur, en direction de l'arbre (2) et l'un contre l'autre, par des membres (5, 17) s'étendant axialement par rapport à l'arbre (2) sur la dimension axiale des segments et les segments (3) étant de section sensiblement triangulaire, créant ainsi un périphérie de rotor en dents de scie, caractérisé en ce que les segments (3) du corps filtrant ne s'étendent pas jusqu'à l'arbre (2) mais qu'ils laissent un espace libre à proximité du centre du rotor, améliorant ainsi l'écoulement de l'eau et l'échange d'oxygène afin d'éviter des conditions anaérobies.

2. Contacteur biologique de rotation selon la revendication 1, caractérisé en ce qu'il comprend à sa périphérie des membres axiaux supplémentaires (16, 18) conçus de manière à créer un écoulement à travers le C.B.R., de la périphérie vers le centre.

3. Contacteur biologique de rotation selon l'une des revendications précédentes, caractérisé en ce que les membres (5) pressant les segments (3) du corps filtrant vers l'intérieur sont pressés vers l'intérieur par montage sur des leviers (6).

4. Contacteur biologique de rotation selon la revendication 3, caractérisé en ce que les leviers (6) sont bloqués dans une position pressant les membres (5) contre les segments (3) au moyen de boulons (13) et de supports (14) fixés sur les membres (5).

5. Contacteur biologique de rotation selon l'une des revendications 1 et 2, caractérisé en ce que les segments (3) présentent des superficies de surfaces spécifiques différentes le long de l'arbre.

# FIG.1

# FIG.2

# FIG.3

# FIG. 4

# FIG. 5